# EUROPEAN PATENT SPECIFICATION

(11) **EP 1 640 288 B1**
(45) Date of publication and mention of the grant of the patent: **01.09.2010**
(21) Application number: 04746640.4
(22) Date of filing: 30.06.2004
(51) Int. Cl.: B65D 81/20, A23L 3/375

(54) **FROZEN MATERIAL PACKAGE AND METHOD OF MANUFACTURING FROZEN MATERIAL PACKAGE**
GEFRIERGUTVERPACKUNG UND VERFAHREN ZUR HERSTELLUNG DER GEFRIERGUTVERPACKUNG
EMBALLAGE DE MATERIAU CONGELE ET PROCEDE DE FABRICATION DE CET EMBALLAGE

(30) Priority: 30.06.2003 JP 2003187415; 29.06.2004 JP 2004191588
(43) Date of publication of application: 29.03.2006
(73) Proprietor: MORINAGA MILK INDUSTRY CO., LTD., Minato-ku, Tokyo-to 108-0014 (JP)
(72) Inventor: ISHIBASHI, Norio, Morinaga Milk Industry Co., Ltd., Zama-shi, Kanagawa 2280004 (JP); ABE, Fumiaki, Morinaga Milk Industry Co., Ltd. ., Zama-shi, Kanagawa 2280004 (JP); YAMATO, Shoji, Dai Nippon Printing Co., Ltd., Shinjuku-ku, Tokyo 162-8001 (JP); SHIINA, Noriyuki, Dai Nippon Printing Co., Ltd., Shinjuku-ku, Tokyo 162-8001 (JP)
(74) Representative: Tappe, Hartmut
(86) International application number: PCT/JP2004/009171
(87) International publication number: WO 2005/000707

(56) References cited:
- EP-A- 0 127 466
- EP-A- 0 160 978
- JP-A- 1 249 715
- JP-A- 1 249 715
- JP-A- 11 502 103
- JP-A- 2000 264 381
- JP-U- 54 170 926
- JP-U- 58 183 372

## Description

### TECHNICAL FIELD

The present invention relates to a frozen material packaging body having the frozen material filled therein according to claim 1, and a method of manufacturing the frozen material packaging body according to claim 3.

### BACKGROUND ART

In general, frozen food and drink, frozen pharmaceuticals, frozen cultures (i.e. so-called starter culture, a process of manufacture of the frozen cultures is disclosed in Non-Patent Document 1), or the like have been filled into a container made from such as a paper (e.g. a container like a milk carton) so as to be stored and gone into commercial circulation. In this case, a content to be packed into the container is food and drink, pharmaceuticals, cultures, or the like. Therefore, a hygienic administration is important. Accordingly, it is ordinary that containers for filling are totally enclosed immediately after filling the contents. Hereinafter, a container with a frozen material filled therein is referred to as a frozen material packaging body. Non-Patent Document 1: "science and technology of lactic acid bacterium", pages 352-353, edited by LACTIC ACID BACTERIUM RESEARCH AND OPINION EXCHANGE ASSOCIATES, published by SOCIOLOGY PUBLISHING CENTER CORPORATION in February 28, 1996.

### DISCLOSURE OF THE INVENTION

### Problems to be Solved by the Invention

However, for example in frozen cultures, as described in Non-Patent Document 1, since a liquid nitrogen is used for freezing, the temperature is the same as or lower than -40 Celsius degree (It may be -150 Celsius degree or less). When the frozen cultures are filled in a container and totally enclosed immediately thereafter to make a frozen material packaging body, during storage in a freezing chamber at a temperature of, for example, around -40 Celsius degree, gases such as air and nitrogen in the container expand due to the temperature change (temperature increment). As a result, there is a case where the container deforms or bursts. This problem occurs during not only storage in a freezing chamber but also a process of commodity circulation and an unattended process for using frozen cultures in a factory at a room temperature.

The present invention is provided to solve the above problems and to provide a container, which does not deform and burst even when a content or a gas in the container expands by a temperature difference between before and after making the frozen material packaging body and enables hygienic administration of the content, a frozen material packaging body, with the frozen material filled therein, and a method of manufacturing the frozen material packaging body.

### MEANS OF SOLVING THE PROBLEM

According to an aspect of solving the above problems in the present invention, a container for filling a frozen material therein has the features defined in claim 1, in particular, a vent hole, which is covered by a filter material having microbial impermeability and air permeability, at least at a portion of the container.

Since the vent hole is formed at least at a portion of the above container and the port is covered with a filter material having microbial impermeability and air permeability, even when a content or a gas in the container expands by a temperature difference between before and after forming the frozen material packaging body, the gas inside the container is outwards released from the vent hole. Therefore, it is possible to maintain an equilibrium state between the inside pressure and the outside pressure of the container. Accordingly, it is possible to prevent the container from being deformed and burst and microbes from intruding inside the container from the outside thereof. Therefore, there is no problem that the content is subjected to unhygienic exposure by providing the vent hole.

The filter material used in the above container may be an unwoven paper having a air permeability of a range of 5 to 10000 sec / 100cc under JIS-P8117 (Gurley method).

The unwoven paper having such the degree of the air permeability is a filter material having both the microbial impermeability and air permeability and suitable for the container according to the present invention.

The container is formed by a laminated body which is fabricated by laminating thin films. A paper layer exists in the laminated body.

When a paper container is used as descried above, since the paper has a better low temperature resistance than a synthetic resin and so on, the container itself scarcely damaged after filling it with a content which is frozen by liquid nitrogen and has a very low temperature. Further, because the container is made of paper, the manufacturing cost can be reduced.

Furthermore, an aluminum foil layer exists in a laminated body forming the above container.

By providing the aluminum foil layer as described above, it is possible to improve tearing strength, burst strength and barrier strength. Further, the fermentative ability of bacteria, for example when bifidobacteria and so on are filled in the container, can also be improved.

According to another aspect of solving the problem in the present invention, the frozen material packaging body includes the above container and a frozen material filled in the container.

According to another aspect of solving the problem in the present invention, a method of manufacturing the frozen material packaging body includes the steps defined in claim 3, in particular, a frozen material formation step of freezing a liquid material by dropping a liquid material through liquid nitrogen to form a frozen material in a shape of pellet, a frozen material filling step of filling the above mentioned container with the frozen material formed in the frozen material formation step, and a packaging step of hermitically sealing the container filled with the frozen material so as to shape the frozen material packaging body.

### EFFECT OF THE INVENTION

According to the container related to the present invention, even when a temperature difference may occur between before and after forming the frozen material package body and thereby the content and the gas in the container expands, because the vent hole covered by the filter material having microbial impermeability and air permeability is formed at least in a portion of the container, the gas inside the container is outwards released from the vent hole to maintain an equilibrium state between the inner pressure and the outer pressure of the container. Therefore, it is possible to prevent the container from being deformed or burst and microbes from intruding from the outside to the inside. Accordingly, there occurs no problem that the content is exposed in an unhygienic manner by providing the vent hole.

Further, according to the method of manufacturing the frozen material package body according to the present invention, since the container described above is used, even though the frozen material is filled in the container and the container is hermetically sealed immediately after freezing the frozen material, the container does not expand or burst. Therefore, it is possible to improve its process yield.

### BRIEF EXPLANATION OF DRAWINGS

[Figure 1] A perspective view of a container related to the present invention.
[Figure 2] A cross-sectional view for explaining a layered structure of a container shown in Figure 1 and related to the present invention.

### Description of Reference Numerals

10: Container
11: Filter material
12: Vent hole

### BEST MODES FOR CARRYING OUT THE INVENTION

### (1) Container

Hereinafter, a container according to the present invention will be specifically described in reference of figures.

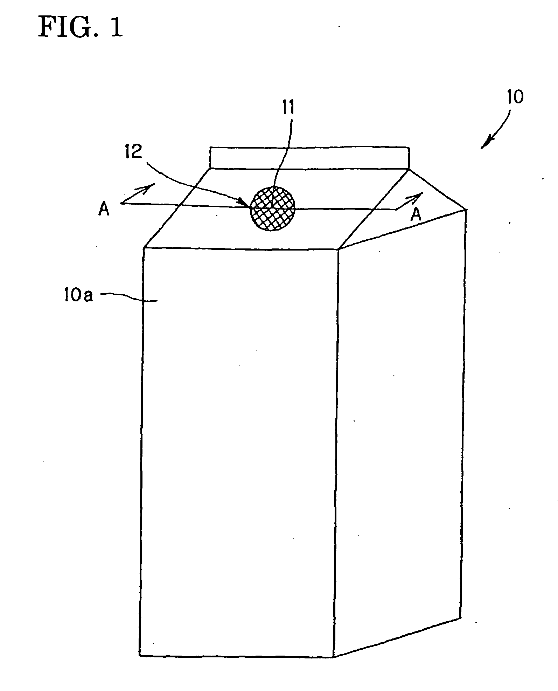

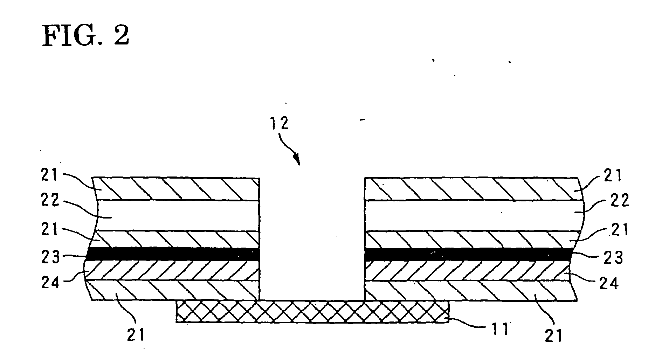

Figure 1 is a perspective view of the container according to the present invention. Figure 2 is a cross-sectional view taken along a line A-A for illustrating a layer structure of a container shown in Figure 1 in accordance with the present invention.

As shown in Figure 1, the container 10 according to the present invention is provided to be filled with a frozen material, and at least in a portion of the container 10 has a vent hole 12 covered by a filter material 11 which has microbial impermeability and air permeability.

The vent hole 12 in a container according to the present invention is formed in order to prevent deformation and burst of the container from occurring even when a frozen material being a content of the container or a gas inside the container expands by outward releasing the gas inside the container to maintain an equilibrium state of the inner and outer pressures of the container. Accordingly, in the container 10 of the present invention, a position where the vent hole 12 is formed, a number of the vent hole 12, and a size and a shape of the vent hole 12 are not specifically limited as long as the above functions are demonstrated.

A position of forming the vent hole is preferably a portion of the container which is not directly in contact with the frozen material filled in the container. For example, it is preferably positioned in the vicinity of the upper end of the container 12. The frozen material filled in the container may be a material of a very low temperature of minus 40 Celsius degree or less. Accordingly, when the vent hole 12 and the frozen material are in a direct contact, there is a case where a filter material 11 which is formed to cover the vent hole 12 may be damaged by the frozen material.

Further, as for the number of the vent holes, it differs with respect to the size of the vent holes. However, it is ordinarily possible to sufficiently achieve the purpose of the vent hole by providing one or two of these.

The size of the vent hole 12 can be arbitrarily set in consideration of the size of the container 10 (the amount of the frozen material to be filled). For example, when the volume of the container 10 is two liters, the size of the vent hole is preferably 2 to 35 cm² per one hole. Further, the shape of the vent hole 12 may be a round shape as shown in Figure 1 or a rectangular shape. Further, the number of the vent holes may be two or more.

In the container 10 according to the present invention, the above described vent hole 12 is covered by a filter material 11 having microbial impermeability and air permeability. The filter material 11 is provided in order to prevent microbes from intruding inside the container through the vent hole 12 and guarantee hygienics inside the container. Accordingly, as long as a filter material 11 can achieve the object of the present invention, namely the filter material 11 has microbial impermeability and air permeability, the material is not specifically limited. However, there are a case where the frozen material, being the content of the container, according to the present invention has a very low temperature material of minus 40 Celsius degree or less and a case where the frozen material is a food or bacterium. Therefore, it is preferable that the filter material has low temperature resistance and gamma ray resistance in consideration of an occasion of conducting gamma sterilization in addition to the above described microbial impermeability and air permeability.

Specifically, it is possible to mention an unwoven paper having an air permeability of a range of 5 to 1000 sec per 100cc under JIS-P8117 (the Gurley method) as such the filter material 11. The unwoven paper having the air permeability in this range sufficiently satisfies the both of the microbial impermeability and the air permeability, necessary for the filter material 11 used in a container according to the present invention. When the air permeability under the Gurley method is less than 5 sec per 100 cc, there may be a case where the necessary air permeability is not obtainable. As a result, there may occur expansion and burst of the container 10. On the other hand, when the air permeability under the Gurley method is larger than 10000 sec per 100 cc, even though the air permeability is sufficient, there may be a problem in microbial impermeability so as not to guarantee hygienics of a frozen material filled in a container.

The material of the unwoven paper having such the air permeability is not specifically limited. The unwoven paper may be formed by arbitrarily selecting and using polypropylene, high-density polyethylene, polyethylene terephthalate, nylon, ethylene methacrylic acid copolymer, ethylene acrylic acid copolymer, and so on. Especially, an unwoven paper made from high density polyethylene is preferable. Specifically, Tyvek (Tyvek 1073B) made by Dupont-Asahi Flash Spun Products Co., Ltd is preferable. Further, the unwoven paper used in the present invention may be made or formed by mixing a plurality of the above-mentioned materials or laminating a plurality of the above-mentioned materials.

Next, a container body 10a of the container 10 according to the present invention will be described.

In the present invention, although the material (layer structure) and a shape of the container body 10a are not specifically limited, and can be arbitrarily selected depending on types and uses of frozen materials to be filled. For example, when a frozen material to be filled is a frozen culture (so-called starter culture), the shape of the container 10 is ordinarily a gable top type as shown in Figure 1 and the size thereof is ordinarily one to two liters.

For example, the container body 10a may be formed to be a laminated body formed by arbitrarily laminating a paper, a thermal plastic resin, and so on. Specifically, as shown in Figure 2, the arrangement may be in an order of, from the outside of the container, polyethylene 21/ paper 22, polyethylene 21/aluminum foil 23/ polyethylene terephthalate 24/ polyethylene 21. As such, by using polyethylene as the material of the most inner layer of the container body and polyethylene as the above described filter material 11, it becomes convenient because a thermal welding method is usable when the filter material 11 is provided in the vent hole 12. Further, by providing an aluminum foil layer in the layer structure, it is possible to give further tearing strength, burst strength, and barrier strength to the container 10. Further, when a bacterium such as bifidobacteria is filled in a container, it is possible to improve fermentative ability of the bacterium.
Further, a container body 10a according to the embodiment may be a container of an unheated type which does not require heating with, for example, a microwave oven. Therefore, even if an aluminum foil layer is provided, no specific problem occurs.

Further, although it is not shown in Figure 2, it is possible to provide a print layer to give design to a container 10. Furthermore, it is possible to provide a heat resistance layer made from such as polyethylene terephthalate or nylon.

### (2) Frozen material packaging body

Next, a frozen material packaging body according to the present invention will be described.

The frozen material packaging body according to the present invention is made up of a container 10 as described above and a frozen material to be filled therein.

The frozen material forming the frozen material packaging body according to the present invention is not specifically limited and any material may be selected. Especially, frozen food and drink, frozen pharmaceuticals, and frozen bacterium are preferable. Specifically, it is possible to exemplify a starter culture, which is obtained by freezing slurry of bacterium necessary for producing frozen ice candy, frozen concentrated egg yolk, and yogurt. Especially, the frozen culture (starter culture) is suitable because the advantages of the container according to the present invention are enjoyed most. The frozen culture should ordinarily not be dead. Therefore, the frozen culture is unfrozen itself without artificially applying heat with for example a microwave oven. In the present invention, such the frozen material that is to be unfrozen itself is most preferable. When a frozen material is a frozen culture, it is preferable to sterilize an inside of container 10 before filling the frozen culture. For example, gamma sterilization and gaseous sterilization are preferably performed.

The shape of such frozenmaterial is not specifically limited. However, a frozen material is more preferably in a shape of pellet.

### (3) Method of manufacturing frozen material packing body

Next, a method of manufacturing the above mentioned frozen material packing body will be described in accordance with the present invention.

The method of manufacturing frozen material packing body according to the present invention includes a frozen material forming step of freezing a liquid material by dropping the liquid material through liquid nitrogen, a frozen material filling step of filling the frozen material formed in the frozen material forming step in the above described container (10), and a packaging step of forming a frozen material packaging body by hermetically sealing the container with the frozen material filled. According to the method of manufacturing frozen material packaging body in the present invention, since the liquid nitrogen is first used in the frozen material forming step, the frozen material is instantaneously formed. Further, according to the method of the present invention, since the frozen material formed in the frozen material forming step is filled in the container and hermetically sealed immediately after taking it out of the liquid nitrogen, it is possible to prevent the frozen material from being unfrozen while manufacturing the frozen material packaging body. As such, when the frozen material is immediately filled in the container and hermetically sealed, there are cases where liquid nitrogen is left on a surface of the frozen material or oxygen existing in the vicinity of a surface of the frozen material is cooled by the frozen material and mixed into the container in a solid phase. Accordingly, in such cases, when a conventional container (namely a totally enclosed container without a vent hole) is used, the liquid nitrogen remaining after the filling and the oxygen mixed inside the container in a solid phase are evaporated to thereby make the container expand /burst. In a conventional technique, it is necessary to wait for evaporation of the liquid nitrogen and the solid oxygen until these are evaporated by increasing the surface temperature of the frozen material. However, since the manufacturing method of the frozen material packaging body according to the present invention uses the above described container according to the present invention, even when a frozen material is filled and hermetically sealed , the container does not expand and burst to thereby improve process yield in manufacture.

Meanwhile, the present invention is not limited to the above embodiment. The above embodiment is provided only as an example. All whatever having substantially the same structure as and similar functions and effects to those in the technical idea described in the scope of claims in the present invention are included in the technical scope of the present invention.

### Embodiment

### (Example 1)

A paper container (Quantity: 2 liters) of a gable top type (as shown in Figure 1)having a vent hole, which is covered by a filter material and located in the vicinity of the upper portion of the container (vide Figure 1), is prepared in accordance with Example 1 of the present invention.

In the paper container according to Example 1, the filter material is Tyvek (Tyvek1073B) made by Dupont-Asahi Flash Spun Products Co., Ltd and having the air permeability under JIS-P8117 (Gurley method) of 5 to 40 sec per 100 cc. The number of the vent holes is one. The shape of the vent hole is circular, and the size is a diameter of 3cm. The filter material is bonded by a thermal welding method so as to completely cover the vent hole inside the container. Further, the layer structure of the container body is shown in Figure 2.

### (Comparative Example 1)

As a paper container according to Comparative Example 1, a paper container having similar shape, size, and layer structure to those of Example 1 is prepared. However, the paper container does not have any vent hole.

### (Comparative Example 2)

As a paper container according to Comparative Example 2, a paper container having similar shape, size, and layer structure and also a similar vent hole to that of Example 1 is prepared. However, the vent hole formed in the paper container is not covered by a filter (a vent hole is simply formed in the container).

### Test 1

Four containers according to Example 1 of the present invention and four containers according to Comparative Example 1 are prepared. Frozen material packaging bodies are manufactured in accordance with the manufacturing method of the frozen material packaging body according to the present invention.

Specifically, a skimmed milky liquid (concentration is 10 mass %) is first prepared and dropped through liquid nitrogen to form frozen materials (specific volume of 0.5 g/cm²). Next, the frozen materials are taken out of the liquid nitrogen by a stainless net and stored in freezing chambers while adjusting temperatures of the frozen materials respectively to be -40, -80, -150, and less than -150 Celsius degrees. Thereafter, the frozen materials of these temperatures as much as 1kg each are respectively filled in the containers manufactured according to Example 1 and the container manufactured according to Comparative Example 1, and the upper ends of the containers are sealed.

These containers are derelict at a room temperature of 25 Celsius degree for one hour and at a temperature of -40 Celsius degree in a freezing chamber for twenty four hours respectively to observe expansion of the containers.

Results are shown in Table 1 as follows.

**[Table 1]**

| Result when containers are left for an hour at a room temperature (25 Celsius degree) | | | | |
|---|---|---|---|---|
| Temperature (Celsius degree) of frozen material | -40 | -80 | -150 | under -150 |
| Example 1 | Not Expand | Not Expand | Not Expand | Not Expand |
| Comparative Example 1 | Expand | Expand | Expand | Expand |

| Result when containers are left inside freezing chamber at a temperature (-40 Celsius degree) for twenty-four hours | | | | |
|---|---|---|---|---|
| Temperature (Celsius degree) of frozen material | -40 | -80 | -150 | under -150 |
| Example 1 | Not Expand | Not Expand | Not Expand | Not Expand |
| Comparative Example 1 | Not Expand | Expand | Expand | Expand |

As known from Table 1, in the frozen material packaging bodies using the containers according to Example 1 of the present invention, even though the packages are left at a room temperature or in a freezing chamber, they do not expand. However, in the frozen material packaging bodies using the containers of Comparative Example 1, the packages expand. (However, the container filled with the frozen material of -40 Celsius degree and left inside the freezing chamber having-40 Celsius degree did not expand. This is because there is no temperature difference, and a gas inside the container does not expand. Namely, in the present invention, when a frozenmaterial is frozen and stored, by filling the frozen material at a temperature less than a temperature at which the frozen material is frozen and stored, for example the frozenmaterial is filled in a temperature condition of -40 Celsius degree, preferably -80 Celsius degree or less, an advantage of the present invention is more suitably enjoyable.)

### Test 2

Containers according to Example 1 of the present invention and containers according to Comparative Examples 1 and 2 are prepared and respectively subjected to irradiation of a gamma beam of 10 to 30 kilo Gray (kGy) to sterilize inside the containers.

Skimmed milky liquid are boiled at 121 Celsius degrees for 15 minutes, and thereafter it is dropped through liquid nitrogen which has been sterilized with a filter thereby forming a frozen material having a temperature of -150 Celsius degree.

The frozen material is placed inside a clean room. The frozen material of one kilogram each is respectively filled in the containers according to Example 1 and the containers according to Comparative Examples 1 and 2, thus sterilized. Then the upper end portions of the containers are hermetically sealed to thereby form the frozen material packaging bodies.

After cultivating each of the frozen material packaging bodies for five days at a temperature of 30 Celsius degree, it is checked whether or not each of the contents of the packaging bodies corrupts.

The results are shown in Table 2.

**[Table 2]**

| | Corrupted or not? |
|---|---|
| Example 1 | Not Corrupt |
| Comparative Example 1 | Corrupt |
| Comparative Example 2 | Corrupt |

As known from the Table 2, in the frozen packaging body according to the present invention, even though it was incubated for five days at a temperature of 30 Celsius degree, the content did not corrupt. However, in the frozen packaging body using the containers according to Examples 1 and 2, the content corrupted. This is because, in the container according to the present invention, the filter material having microbial impermeability and air permeability prevents microbes from intruding inside the container and enables constant ventilation inside the container. However, in the container according to Comparative Example 1, since it is totally enclosed, it was impossible to prevent expansion of the container, and a fault occurs at a sealing portion of the container along with the expansion to allow intrusion of microbes inside the container. In the container according to Example 2, the result means that microbes should have intruded through the vent hole.

### Test 3

The four containers according to Example 1 of the present invention and the four containers according to Comparative Example 1 of the present invention are prepared. The frozen material similar to that in Test 2 is filled in these containers respectively by amounts of 400 ml (20% of the container volume), 1000ml (50% of the container volume), 1500ml (75% of the container volume) , and 2000ml (100% of the container volume). Then the upper ends of the containers are hermetically sealed to form frozen material packaging bodies.

Each of the frozen material packaging bodies are left at a room temperature of 25 Celsius degree for 2 hours while observing expansion of these containers.

The result is shown in Table 3 as follows.

**[Table 3]**

| Filled Amount | 400ml (20%of Container Volume | 1000ml (50%of Container Volume | 1500ml (75%of Container Volume | 2000ml (100%of Container Volume |
|---|---|---|---|---|
| Example 1 | Not Expand | Not Expand | Not Expand | Not Expand |
| Comparative Example 1 | Without substantive Expansion | Expand | Expand | Expand |

As known from Table 3, in the frozen material packaging bodies using the containers according to Embodiment 1 of the present invention, regardless of the filled amount of the frozen material (even though it is filled 100%), the containers did not expand. Meanwhile, in the frozen material packaging bodies using the containers of Comparative Example 1, although a large expansion has not been observed, it was impossible to prevent the container from expanding when the frozen material was filled more. Namely, in the present invention, it is possible to preferably enjoy the advantages of the present invention when the filled amount of the frozen material exceeds 20% of the container volume (preferably 50% or more).

### (Comparative Example 3)

The paper container according to Comparative Example 3 is prepared. A layer structure of its container body is in an order of polyethylene/paper/ polyethylene from the outside of the container. The other portions are similar to those of the paper container of Example 1.

### Test 4

A laminated body (with aluminum foil layer) used for a body of the container according to Example 1 and a laminated body (without aluminum foil layer) used for a body of the container according to Comparative Example 3 of the present invention are prepared to measure their tearing strength and burst strength.

The result is shown in Tables 4 and 5. The tearing strength is measured with an Elemendorf Tearing Tester (Toyo SEIKI SEISAKU-SHO, . LTD) in compliance with JIS P 8116. The tearing direction is from the surface side to the back side. The burst strength is measured with a Mullen burst tester (high pressure type) (Toyo SEIKI SEISAKU-SHO,. LTD) in compliance with the measurement method of JIS P 8131. The bursting direction is from the surface side to the back side.

**[Table 4]**

| | Tearing Strength in Longitudinal Direction (mN) | Tearing Strength in Lateral Direction (mN) |
|---|---|---|
| Example 1 | 525 | Impossible to tear down |
| Comparative Example 3 | 1447 | 450 |

**[Table 5]**

| | Burst Strength in Longitudinal Direction (Pa) |
|---|---|
| Example 1 | 1091 |
| Comparative Example 3 | 771 |

As known from Tables 4 and 5, the laminated bodies used in Example 1 of the present invention are excellent with respect to both of the tearing strength and the burst strength in comparison with that of Comparative Example 3. This result is
considered to depend on whether or not the aluminum foil layer exists in the laminated body. Namely, it is preferable that an aluminum foil layer exists in the container according to the present invention as described in reference of Figure 2. Further, the laminated body used in Example 1 has polyethylene terephthalate laminated in addition to the aluminum foil layer. Such the laminated body is superior to that of Comparative Example 3 because of a synergistic effect between an aluminum foil layer and polyethylene terephthalate.

Since the container of the present invention is to fill with the frozen material in a shape of pellet, when the frozen material is stored at a relatively high temperature of -15 Celsius degree ormore, the pellets are apt to mutually connect, a lump may be produced, and the entirety may solidify. In this case, since the frozen pellets cannot be evacuated from the opening of the container, it is necessary to give an impact of, for example, beating at the outside of the container. In such the case, it is necessary to increase the strength of the container. According to the result of Test 4, it is known that the strength of the container body can be increased by providing an aluminum foil layer and polyethylene terephthalate inside the laminated body forming the container.

### Test 5

A laminated body (with aluminum foil layer) used for a body of the container according to Example 1 and a laminated body (without aluminum foil layer) used for a body of the container according to of Comparative Example 3 of the present invention
are prepared to measure their oxygen permeability and moisture permeability.

The result is shown in Table 6 as follows. These measurements are done using OX-TRAN (MOCON Company) incompliance with JIS K 7126.

**[Table 6]**

| | Oxygen Permeability (ml/m² · day · MPa) | Moisture Permeability (ml/m² · day · MPa) |
|---|---|---|
| Example 1 | 10 | 0 |
| Comparative Example 3 | 114805 to 29610 | 6 |

As known from Table 6, the laminated body used for the container body of Example 1 of the present invention is superior in both of oxygen permeability and moisture permeability to the container according to Comparative Example 3. This reason seems to reside in a difference of whether or not the aluminum foil layer exists inside the laminated body in a similar manner to Test 4 described above. Accordingly, in the container of the present invention formed in use of the laminated body having the aluminum foil layer, it is possible to completely shut down transmission of oxygen between the outside and the inside in the main body of the container except for the vent port.

### Embodiment 2

A laminated body according to Example 1 and a laminated body according to Comparative Example 3 of the present invention are prepared. Pellets obtained by freezing bifidobacteria which are cultivated in a culture media of milk (10% skimmed milk solution and 1% yeast extract) are filled in the containers. Thereafter, while maintaining the containers sealed, the pellets obtained by freezing bifidobacteria are dissolved and fermented at a temperature of 37 Celsius degree. The pH changes of thus obtained dissolved liquid inside the containers are measured.

The result is shown in Table 7 as follows.

**[Table 7]**

| | 0 hr | 2 hr | 3 hr | 14 r | 5 hr | 6 hr | 17 hr | 8 hr |
|---|---|---|---|---|---|---|---|---|
| Example 1 | 6.20 | 6.14 | 6.07 | 5.91 | 5.62 | 5.29 | 4.96 | 4.17 |
| Comparative Example 3 | 6.20 | 6.20 | 6.19 | 6.14 | 6.03 | 5.82 | 5.47 | 5.11 |

As known from Table 7, the pH of the dissolved liquid inside the container according to the present invention has a lower drop rate in comparison with that of Comparative Example 3. This means fermentation by bifidobacteria runs faster. Accordingly, there is a stronger effect of enhancing fermentation of contents by anaerobe such as bifidobacteria in the container according to Example 1(i.e. container having an aluminum foil layer in its laminated body) than in the container according to Comparative Example 3.

## Claims

1. A frozen material packaging body (10) comprising:
a container (10a) formed using a laminated body including at least a layer of paper (22) and a layer of aluminum (23); and
a vent port (12) covered with an air-permeable filter material (11), made from an unwoven paper having microbial impermeability and air permeability of a range of 5 to 10000 sec/100 cc under JIS-P8117, according to the Gurley method, and formed at least in a portion of the container; and
a frozen culture filled in the container.

2. A frozen material packaging body according to Claim 1, wherein
the frozen culture is frozen pellets of bifidobacteria.

3. A method of manufacturing a frozen material packaging body comprising:
a step of forming a pellet-like frozen culture by dropping a culture that is incubated in a liquid medium through liquid nitrogen along with the liquid medium;
a step of filling the pellet-like frozen culture in a a container (10a) formed using a laminated body including at least a layer of paper (22) and a layer of aluminum (23) and having, at least in a portion of the container, a vent port (12) covered with an air-permeable filter material (11), made from an unwoven paper having microbial impermeability and air permeability of a range of 5 to 10000 sec/100 cc under JIS-P8117, according to the Gurley method; and
a step of hermetically sealing the container thus filled.

4. A method of freezing and fermenting a culture according to claim 3 comprising after the step of hermetically sealing the container (10a) thus filled
a step of heating the frozen material packaging body (10) thus sealed in an unopened state to melt the frozen culture; and
a step of successively fermenting the frozen culture.

5. A method of freezing and fermenting the culture according to Claim 4, wherein:
the liquid medium is milk;
the frozen culture is frozen pellets of bifidobacteria; and
the fermentative temperature is 37 Celsius degree.

## Patentansprüche

1. Verpackungskörper (10) für gefrorenes Material, umfassend:
einen Behälter (10a), der unter Verwendung eines laminierten Körpers, umfassend zumindest eine Papierschicht (22) und eine Aluminiumschicht (23), gebildet ist, und
eine Entlüftungsöffnung (12), die mit einem luftdurchlässigen Filtermaterial (11) bedeckt ist, das aus ungewobenem Papier gefertigt ist, welches eine Mikrobenundurchlässigkeit und Luftdurchlässigkeit in einem Bereich von 5 bis 10000 s/100 cm³ gemäß JIS-P8117 nach dem Gurley-Verfahren aufweist, und die zumindest in einem Abschnitt des Behälters ausgebildet ist, und
eine in den Behälter eingefüllte gefrorene Kultur.

2. Verpackungskörper für gefrorenes Material nach Anspruch 1, wobei es sich bei der gefrorenen Kultur um gefrorene Bifidobakterienpellets handelt.

3. Verfahren zur Herstellung eines Verpackungskörpers für gefrorenes Material, umfassend folgende Schritte:
Herstellung einer pelletähnlichen gefrorenen Kultur durch Eintropfen einer in einem Flüssigmedium angezüchteten Kultur in flüssigen Stickstoff zusammen mit dem Flüssigmedium;
Einfüllen der pelletähnlichen gefrorenen Kultur in einen Behälter (10a), der unter Verwendung eines laminierten Körpers, umfassend zumindest eine Papierschicht (22) und eine Aluminiumschicht (23),
gebildet ist, und der zumindest in einem Abschnitt des Behälters eine Entlüftungsöffnung (12) aufweist, die mit einem luftdurchlässigen Filtermaterial (11) bedeckt ist, das aus ungewobenem Papier gefertigt ist, welches eine Mikrobenundurchlässigkeit und Luftdurchlässigkeit in einem Bereich von 5 bis 10000 s/100 cm³ gemäß JIS-P8117 nach dem Gurley-Verfahren aufweist, und
hermetisches Versiegeln des auf diese Weise befüllten Behälters.

4. Verfahren zum Gefrieren und Fermentieren einer Kultur nach Anspruch 3, umfassend die folgenden Schritte nachfolgend dem Schritt des hermetischen Versiegelns des auf diese Weise befüllten Behälters (10a):
Erwärmen des auf diese Weise versiegelten Gefriermaterial-Verpackungskörpers (10) in einem ungeöffneten Zustand, um die gefrorene Kultur aufzutauen, und
anschließendes Fermentieren der gefrorenen Kultur.

5. Verfahren zum Gefrieren und Fermentieren der Kultur gemäß Anspruch 4, wobei:
es sich bei dem Flüssigmedium um Milch handelt,
es sich bei der gefrorenen Kultur um gefrorene Bifidobakterienpellets handelt, und
die Fermentierungstemperatur 37 Grad Celsius beträgt.

## Revendications

1. Corps d'emballage (10) pour un matériel congelé comprenant:
un récipient (10a) étant formé par l'utilisation d'un corps laminé,
comprenant au moins une couche de papier (22) et une couche d'aluminium (23), et
un orifice d'évacuation d'air (12) qui est recouvert par un matériel de filtrage (11) étant perméable à l'air et composé de papier non-tissé présentant une imperméabilité aux microbes et une perméabilité à l'air dans une gamme de 5 à 10000 s/100 cm³ conformément à JIS-P8117 selon la méthode de Gurley et qui est formé au moins dans une section du récipient, et
une culture congelée versée dans le récipient.

2. Corps d'emballage pour un matériel congelé selon la revendication 1, la culture congelée étant des bifidobactéries congelées sous forme de pellets.

3. Procédé pour la production d'un corps d'emballage pour un matériel congelé, comprenant les étapes suivantes:
production d'une culture congelée sous une forme similaire aux pellets en gouttant une culture, qui a été incubée dans un médium liquide, dans l'azote liquide conjointement avec le médium liquide,
versement de la culture congelée sous forme similaire aux pellets dans un récipient (10a) étant formé par l'utilisation d'un corps laminé, comprenant au moins une couche de papier (22) et une couche d'aluminium (23), et présentant au moins dans une section du récipient un orifice d'évacuation d'air (12) recouvert par un matériel de filtrage (11) étant perméable à l'air et composé d'un papier non-tissé présentant une imperméabilité aux microbes et une perméabilité à l'air dans une gamme de 5 à 10000 s/100 cm³ conformément à JIS-P8117 selon la méthode de Gurley, et
scellement hermétique du récipient ainsi rempli.

4. Procédé pour congeler et fermenter une culture selon la revendication 3, comprenant les étapes suivantes suite à l'étape du scellement hermétique du récipient (10a) ainsi rempli:
chauffage du corps d'emballage (10) pour un matériel congelé qui a été scellé de cette manière dans un état non-ouvert afin de décongeler la culture congelée, et
ensuite faire fermenter la culture congelée.

5. Procédé pour congeler et fermenter une culture selon la revendication 4,
le médium liquide étant du lait,
la culture congelée étant des bifidobactéries congelées sous forme de pellets, et
la température de la fermentation étant de 37 degrés Celsius.
